# EUROPÄISCHE PATENTANMELDUNG

(11) **EP 4 495 828 A1**
(43) Veröffentlichungstag der Anmeldung: **22.01.2025**
(21) Anmeldenummer: 23186186.5
(22) Anmeldetag: 18.07.2023
(51) Int. Cl.: G06N 3/045, G06N 3/0475, G06N 3/09, G06N 3/094, G06N 3/096

(54) **VORRICHTUNG UND COMPUTERIMPLEMENTIERTES VERFAHREN ZUM BESTIMMEN EINES DATENSATZES ZUR VERWENDUNG IN EINEM TRAINING, ZUM TRAINING UND ZUM BETREIBEN EINES SYSTEMS ZUM MASCHINELLEN LERNEN**

(71) Anmelder: Robert Bosch GmbH, 70442 Stuttgart (DE)
(72) Erfinder: Laube, Kevin Alexander, 72108 Rottenburg Wurmlingen (DE); Borges, Julio, 70176 Stuttgart (DE)

(57) **Zusammenfassung**

Vorrichtung (100) und computerimplementiertes Verfahren zum Bestimmen eines Datensatzes (102) zur Verwendung in einem Training eines Systems zum maschinellen Lernen, wobei wenigstens zwei Datensätze zum Datensatz zur Verwendung im Training kombiniert werden, wobei die wenigstens zwei Datensätze einen ersten Datensatz (202) und einen zweiten Datensatz (204) zum Datensatz (102) zur Verwendung im Training kombiniert werden (208), wobei der erste Datensatz (202) ein erstes digitales Bild (206), das durch wenigstens ein Label (208), insbesondere durch eine one-hot Kodierung mit einem Label oder durch eine multi-hot Kodierung mit mehreren Labeln, aus einem ersten Satz von Labeln gekennzeichnet ist, umfasst, und der zweite Datensatz (204) ein zweites digitales Bild (210), das durch wenigstens ein Label (212), insbesondere durch eine one-hot Kodierung mit einem Label oder durch eine multi-hot Kodierung mit mehreren Labeln, aus einem zweiten Satz von Labeln gekennzeichnet ist, umfasst, wobei die beiden Sätze von Labeln sich durch wenigstens ein Label unterscheiden, wobei abhängig von den beiden Sätzen von Labeln eine erste Kodierung (214) zum Kennzeichnen des ersten digitalen Bildes (206) mit Labeln aus beiden Sätzen von Labeln bestimmt wird (204), wobei die erste Kodierung (214) auf eine erste Repräsentation (216) in einem Zustandsraum (218) abgebildet wird, wobei der Datensatz (102) zur Verwendung im Training das erste digitale Bild (206) und die erste Repräsentation (216) umfasst. Vorrichtung und computerimplementiertes Verfahren zum Training und zum Betreiben des Systems.

## Beschreibung

### Stand der Technik

Die Erfindung geht aus von einer Vorrichtung und einem computerimplementierten zum Bestimmen eines Datensatzes zur Verwendung in einem Training eines Systems zum maschinellen Lernen, zum Training des Systems zum maschinellen Lernen und zum Betreiben des Systems zum maschinellen Lernen.

### Offenbarung der Erfindung

Ein computerimplementiertes Verfahren zum Bestimmen eines Datensatzes zur Verwendung in einem Training eines Systems zum maschinellen Lernen sieht vor, dass wenigstens zwei Datensätze zum Datensatz zur Verwendung im Training kombiniert werden, wobei die wenigstens zwei Datensätze einen ersten Datensatz und einen zweiten Datensatz umfassen, wobei der erste Datensatz ein erstes digitales Bild, das durch wenigstens ein Label, insbesondere durch eine one-hot Kodierung mit einem Label oder durch eine multi-hot Kodierung mit mehreren Labeln, aus einem ersten Satz von Labeln gekennzeichnet ist, umfasst, und der zweite Datensatz ein zweites digitales Bild, das durch wenigstens ein Label, insbesondere durch eine one-hot Kodierung mit einem Label oder durch eine multi-hot Kodierung mit mehreren Labeln, aus einem zweiten Satz von Labeln gekennzeichnet ist, umfasst, wobei die beiden Sätze von Labeln sich durch wenigstens ein Label unterscheiden, wobei abhängig von den beiden Sätzen von Labeln eine erste Kodierung zum Kennzeichnen des ersten digitalen Bildes mit Labeln aus beiden Sätzen von Labeln bestimmt wird, wobei die erste Kodierung auf eine erste Repräsentation in einem Zustandsraum abgebildet wird, wobei der Datensatz zur Verwendung im Training das erste digitale Bild und die erste Repräsentation umfasst. Die Repräsentation stellt eine kontinuierliche Repräsentation wenigstens eines Labels aus der Vereinigungsmenge zur Kennzeichnung des ersten Bildes basierend dar. Der Datensatz zur Verwendung im Training des Systems zum maschinellen Lernen ist besonders zum Training einer semantischen Bildsynthese abhängig von der ersten Repräsentation im Zustandsraum und dem ersten Bild geeignet. Die semantische Bildsynthese erfolgt z.B. mit einem generativen Modell, das ausgebildet ist, die erste Repräsentation auf ein synthetisches digitales Bild abzubilden.

Es kann vorgesehen sein, dass abhängig von den beiden Sätzen von Labeln eine zweite Kodierung zum Kennzeichnen des zweiten digitalen Bildes mit Labeln aus beiden Sätzen von Labeln bestimmt wird, wobei die zweite Kodierung auf eine zweite Repräsentation im Zustandsraum abgebildet wird, wobei der Datensatz zur Verwendung im Training das zweite digitale Bild und die zweite Repräsentation umfasst. Dadurch werden beide Bilder und die diesen jeweils zugeordnete Repräsentation zum Training des Systems zum maschinellen Lernen insbesondere zur semantischen Bildsynthese verfügbar.

Ein computerimplementiertes Verfahren zum Training eines Systems zum maschinellen Lernen sieht vor, dass ein Datensatz zur Verwendung im Training mit dem Verfahren zum Bestimmen eines Datensatzes zur Verwendung im Training des Systems zum maschinellen Lernen bestimmt wird, wobei das System ein Modell umfasst, das ausgebildet ist, wenigstens ein Label, insbesondere eine one-hot Kodierung eines Labels oder eine multi-hot Kodierung mehrerer Label, auf eine Repräsentation des wenigstens einen Label in dem im Datensatz zur Verwendung im Training vorgesehenen Zustandsraum abzubilden und die Repräsentation aus dem Zustandsraum auf ein synthetisches digitales Bild abzubilden, wobei das Modell mit der ersten Repräsentation und dem ersten digitalen Bild und/oder mit der zweiten Repräsentation und dem zweiten digitalen Bild aus dem Datensatz trainiert wird, die Repräsentation aus dem Zustandsraum auf das synthetische digitale Bild abzubilden, oder wobei das Modell dazu ausgebildet ist, ein digitales Bild auf eine Repräsentation wenigstens eines Labels in dem im Datensatz zur Verwendung im Training vorgesehenen Zustandsraum abzubilden und abhängig von der Repräsentation aus dem Zustandsraum das wenigstens eine Label, insbesondere eine one-hot Kodierung eines Labels oder eine multi-hot Kodierung mehrerer Label, für das digitale Bild zu bestimmen, wobei das Modell mit der ersten Repräsentation und dem ersten digitalen Bild und/oder mit der zweiten Repräsentation und dem zweiten digitalen Bild aus dem Datensatz trainiert wird, das digitale Bild auf die Repräsentation im Zustandsraum abzubilden. Das bedeutet, dass das Modell mit einer Repräsentation wenigstens eines kombinierten Labels trainiert wird, z.B. zur semantischen Bildsynthese.

Ein computerimplementiertes Verfahren zum Betreiben eines Systems zum maschinellen Lernen sieht vor, dass das System zum maschinellen Lernen ein Modell umfasst, das dazu ausgebildet ist, wenigstens ein Label für ein synthetisches digitales Bild, insbesondere eine one-hot Kodierung eines Labels oder eine multi-hot Kodierung mehrerer Label, auf eine Repräsentation des wenigstens einen Labels in dem im Datensatz zur Verwendung im Training vorgesehenen Zustandsraum abzubilden und die Repräsentation aus dem Zustandsraum auf das synthetische digitale Bild abzubilden oder wenigstens ein Label, insbesondere eine one-hot Kodierung eines Labels oder eine multi-hot Kodierung mehrerer Label, für ein digitales Bild zu bestimmen, wobei das Modell mit dem Verfahren zum Training trainiert wird, wobei mit dem Modell das wenigstens eine Label auf eine Repräsentation des wenigstens einen Labels im Zustandsraum abgebildet und die Repräsentation im Zustandsraum auf das synthetische digitale Bild abgebildet wird oder wobei mit dem Modell das wenigstens eine Label für ein digitales Bild bestimmt wird. Das bedeutet, dass das Modell mit einer Repräsentation wenigstens eines kombinierten Labels trainiert wird, z.B. zur semantischen Bildsynthese. Das Modell kann abhängig von vom Modell erzeugten synthetischen digitalen Bildern und/oder abhängig von den Labeln trainiert werden, das synthetische digitale Bild zu labeln, insbesondere zu klassifizieren oder semantisch zu segmentieren.

Es kann vorgesehen sein, dass das System zum maschinellen Lernen ein technisches System umfasst, das zum zumindest teilweise autonomen Betrieb abhängig von wenigstens einem Label, insbesondere eine one-hot Kodierung eines Labels oder eine multi-hot Kodierung mehrerer Label, für ein digitales Bild ausgebildet ist, wobei im Verfahren zum Betreiben des Systems zum maschinellen Lernen das digitale Bild erfasst wird, wobei mit dem Modell das wenigstens eine Label für das digitale Bild bestimmt wird, und wobei das technische System abhängig vom wenigstens einen Label für das digitale Bild zumindest teilweise autonom betrieben wird. Das bedeutet, das System mit dem trainierten Modell reagiert autonom auf zuvor unbekannte digitale Bilder.

Eine Vorrichtung zum Bestimmen eines Datensatzes zur Verwendung in einem Training eines Systems zum maschinellen Lernen, die wenigstens einen Prozessor und wenigstens einen Speicher umfasst, wobei der wenigstens eine Speicher vom wenigstens einen Prozessor ausführbare Instruktionen umfasst, bei deren Ausführung durch den wenigstens einen Prozessor die Vorrichtung das Verfahren zum Bestimmen des Datensatzes ausführt, wobei der wenigstens einen Prozessor ausgebildet ist, die Instruktionen auszuführen weist den Vorteilen des Verfahrens zum Bestimmen des Datensatzes entsprechende Vorteile auf.

Eine Vorrichtung zum Training eines Systems zum maschinellen Lernen, die Vorrichtung wenigstens einen Prozessor und wenigstens einen Speicher umfasst, wobei der wenigstens eine Speicher vom wenigstens einen Prozessor ausführbare Instruktionen umfasst, bei deren Ausführung durch den wenigstens einen Prozessor die Vorrichtung das Verfahren zum Training des Systems zum maschinellen Lernen ausführt, wobei der wenigstens einen Prozessor ausgebildet ist, die Instruktionen auszuführen, weist den Vorteilen des Verfahrens zum Training des Systems zum maschinellen Lernen entsprechende Vorteile auf.

Eine Vorrichtung zum Betreiben eines Systems zum maschinellen Lernen, die wenigstens einen Prozessor und wenigstens einen Speicher umfasst, wobei der wenigstens eine Speicher vom wenigstens einen Prozessor ausführbare Instruktionen umfasst, bei deren Ausführung durch den wenigstens einen Prozessor die Vorrichtung das Verfahren zum Betreiben des Systems zum maschinellen Lernen ausführt, wobei der wenigstens einen Prozessor ausgebildet ist, die Instruktionen auszuführen, weist den Vorteilen des Verfahrens zum Betreiben des Systems zum maschinellen Lernen entsprechende Vorteile auf.

Ein Computerprogramm, das von einem Computer ausführbare Instruktionen umfasst, bei deren Ausführung durch den Computer das Verfahren abläuft, weist den Vorteilen des Verfahrens entsprechende Vorteile auf.

Weitere vorteilhafte Ausführungsformen sind der folgenden Beschreibung und der Zeichnung entnehmbar. In der Zeichnung zeigt:
- Fig. 1: eine schematische Darstellung einer Vorrichtung zum Bestimmen eines Datensatzes,
- Fig. 2: eine schematische Darstellung von Datensätzen,
- Fig. 3: ein Flussdiagramm mit Schritten eines computerimplementieren Verfahrens zum Bestimmen des Datensatzes,
- Fig. 4: eine schematische Darstellung einer Vorrichtung zum Training eines Systems zum maschinellen Lernen,
- Fig. 5: ein Flussdiagramm mit Schritten eines computerimplementieren Verfahrens zum Training des Systems zum maschinellen Lernen,
- Fig. 6: eine schematische Darstellung einer Vorrichtung zum Betreiben des Systems zum maschinellen Lernen,
- Fig. 7: ein Flussdiagramm mit Schritten eines computerimplementieren Verfahrens zum Betreiben des Systems zum maschinellen Lernen.

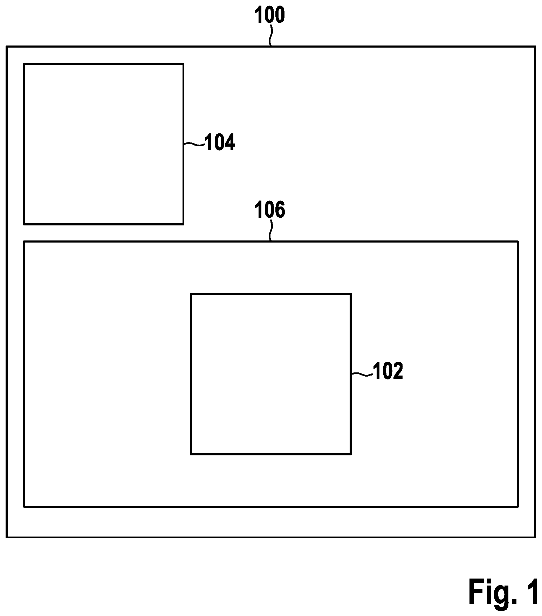

In Figur 1 ist eine schematische Darstellung einer ersten Vorrichtung 100 dargestellt. Die erste Vorrichtung ist zum Bestimmen eines Datensatzes 102 zur Verwendung in einem Training ausgebildet.

Die erste Vorrichtung 100 umfasst wenigstens einen ersten Prozessor 104 und wenigstens einen ersten Speicher 106.

Der wenigstens eine erste Speicher 106 umfasst vom wenigstens einen ersten Prozessor 104 ausführbare Instruktionen, bei deren Ausführung durch den wenigstens einen ersten Prozessor 104 die erste Vorrichtung 100 ein Verfahren zum Bestimmen des Datensatzes 102 zur Verwendung im Training ausführt. Der wenigstens eine erste Prozessor 104 ist ausgebildet, diese Instruktionen auszuführen. Im Beispiel ist der Datensatz 102 zur Verwendung im Training im wenigstens einen ersten Speicher 106 gespeichert.

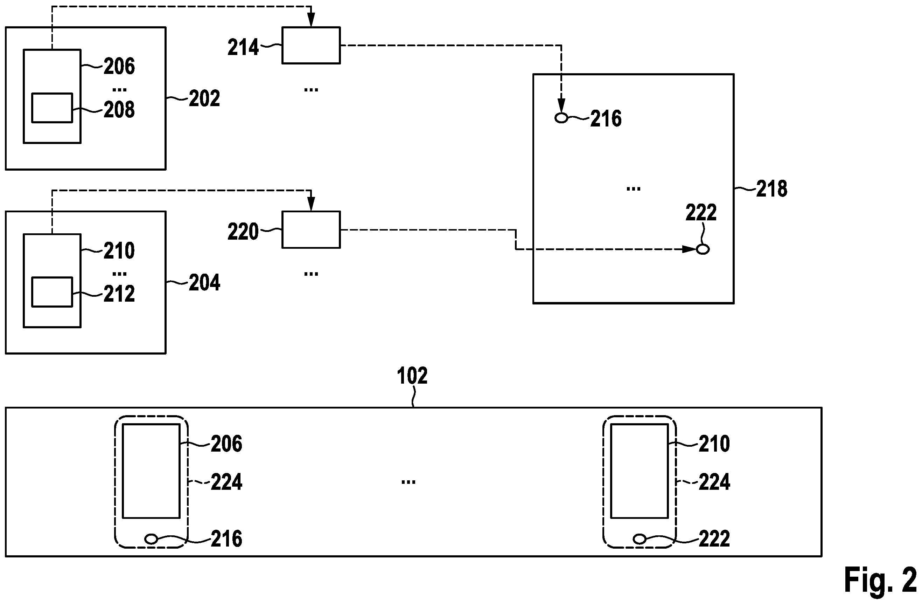

In Figur 2 ist eine Architektur zum Bestimmen des Datensatzes 102 zur Verwendung im Training dargestellt. Der Datensatz 102 zur Verwendung im Training wird abhängig von wenigstens zwei Datensätzen bestimmt. Dies wird am Beispiel einer Bestimmung des Datensatzes 102 zur Verwendung im Training abhängig von einem ersten Datensatz 202 und einem zweiten Datensatz 204 beschrieben.

Ein Beispiel für den ersten Datensatz 202 ist Berkeley DeepDrive, BDD. Ein Beispiel für den zweiten Datensatz 204 ist Cityscapes.

Der erste Datensatz 202 umfasst digitale Bilder, denen je wenigstens ein Label zugeordnet ist, welches das jeweilige digitale Bild kennzeichnet. Im Beispiel ist ein erstes digitales Bild 206, das durch wenigstens ein Label 208 gekennzeichnet ist, vorgesehen. Das erste Bild 206 ist im Beispiel durch eine one-hot Kodierung mit einem Label oder durch eine multi-hot Kodierung mit mehreren Labeln gekennzeichnet. Für das erste Bild 206 ist ein erster Satz von Label vorgesehen, der das Label oder die Label für das erste Bild umfasst.

Die Label aus dem ersten Satz von N Labeln kennzeichnen je eine Klasse. Ein Klasse ist bei der one-hot Kodierung auf einen Vektor {0,1}*^{N}* abgebildet, der genau eine Eins umfasst und ansonsten Nullen. Beispielsweise sind die Elemente eines Vektors, der eine bestimmte Klasse repräsentiert, je einer Klasse zugeordnet, wobei das Element Eins ist, das der bestimmten Klasse zugeordnet ist, die der Vektor repräsentiert. Bei der multi-hot Kodierung ist es zulässig, dass mehrere Elemente des Vektors Eins sind, d.h. der Vektor kann mehrere Klassen repräsentieren.

Ein Beispiel für den ersten Satz von Labeln ist Zweirad, Automobil, Hintergrund Person. Ein beispielhaftes erstes digitales Bild 206 stellt ein Zweirad dar. Ein beispielhaftes erstes Label 208 ist Zweirad. Ein Beispiel für eine one-hot Kodierung des beispielhaften ersten digitalen Bildes 206 ist ein Vektor [1, 0, 0, 0], der das beispielhafte erste Label 208 "Zweirad" repräsentiert.

Der zweite Datensatz 204 umfasst digitale Bilder, denen je wenigstens ein Label zugeordnet ist, welches das jeweilige digitale Bild kennzeichnet. Im Beispiel ist ein zweites digitales Bild 210, das durch wenigstens ein Label 212 gekennzeichnet ist, vorgesehen. Das zweite digitale Bild 210 ist im Beispiel durch eine one-hot Kodierung mit einem Label oder durch eine multi-hot Kodierung mit mehreren Labeln gekennzeichnet. Für das zweite Bild 210 ist ein zweiter Satz von Labeln vorgesehen, der das Label oder die Label für das zweite digitale Bild 210 umfasst.

Die Label aus dem zweiten Satz von M Labeln kennzeichnen je eine Klasse. Ein Klasse ist bei der one-hot Kodierung auf einen Vektor {0,1}*^{M}* abgebildet, der genau eine Eins umfasst und ansonsten Nullen. Beispielsweise sind die Elemente eines Vektors, der eine bestimmte Klasse repräsentiert, je einer Klasse zugeordnet, wobei das Element Eins ist, das der bestimmten Klasse zugeordnet ist, die der Vektor repräsentiert. Bei der multi-hot Kodierung ist es zulässig, dass mehrere Elemente des Vektors Eins sind, d.h. der Vektor kann mehrere Klassen repräsentieren.

Ein Beispiel für den zweiten Satz von Labeln ist Himmel, Vegetation, Person, Fahrzeug. Ein beispielhaftes zweites digitales Bild 210 stellt eine Person dar. Ein beispielhaftes zweites Label 212 ist Person. Ein Beispiel für eine one-hot Kodierung des beispielhaften zweiten digitalen Bildes 210 ist ein Vektor [0, 0, 1, 0], der das beispielhafte zweite Label 212 "Person" repräsentiert.

Die beiden Sätze von Labeln unterschieden sich im Beispiel durch wenigstens ein Label. Im Beispiel sind in beiden Sätzen von Labeln N=M=4 Label vorgesehen. Die Anzahl der Label in den beiden Sätzen kann auch unterschiedlich sein.

Den digitalen Bildern aus dem ersten Datensatz 202 wird je eine Kodierung zum Kennzeichnen des jeweiligen digitalen Bildes zugeordnet, die Label aus beiden Sätzen kodiert. Dem ersten digitalen Bild 206 ist eine erste Kodierung 214 zum Kennzeichnen des ersten digitalen Bildes 206 zugeordnet. Die erste Kodierung 214 kodiert Label aus beiden Sätzen. Dies ist beispielhaft für das erste digitale Bild 206 beschrieben.

In der ersten Kodierung 214 sind die Label, die in beiden Sätzen enthalten sind, zusammengefasst. Im Beispiel umfasst die erste Kodierung 214 die Label der beiden Sätze, die sich voneinander unterscheiden. Die Reihenfolge, in der die Label in der ersten Kodierung 214 enthalten sind, entspricht im Beispiel der Reihenfolge in der die Label im ersten Satz von Labeln angeordnet sind, gefolgt von den Labeln aus dem zweiten Satz von Labeln, die sich von denen im ersten Satz von Labeln unterschieden, in der Reihenfolge in der die sich vom ersten Satz von Labeln unterscheidenden Label im zweiten Satz von Labeln angeordnet sind. Eine andere Reihenfolge ist ebenfalls möglich.

Die erste Kodierung 214 des beispielhaften ersten digitalen Bildes 206 ist ein Vektor [1, 0, 0, 0, 0, 0, 0], dessen Elemente den Labeln Zweirad, Automobil, Hintergrund, Person, Himmel, Vegetation und Fahrzeug zugeordnet sind.

Den digitalen Bildern aus dem zweiten Datensatz 204 wird je eine Kodierung zum Kennzeichnen des jeweiligen digitalen Bildes zugeordnet, die Label aus beiden Sätzen kodiert. Dies ist beispielhaft für das zweite digitale Bild 210 beschrieben.

Dem zweiten digitalen Bild 210 ist eine zweite Kodierung 218 zum Kennzeichnen des zweiten digitalen Bildes 210 zugeordnet. Die zweite Kodierung 218 kodiert Label aus beiden Sätzen.

In der zweiten Kodierung 218 sind die Label, die in beiden Sätzen enthalten sind, wie für die erste Kodierung 214 beschrieben zusammengefasst. Die zweite Kodierung 218 des beispielhaften zweiten digitalen Bildes 210 ist ein Vektor [0, 0, 0, 1, 0, 0, 0].

Es kann vorgesehen sein, dass die erste Kodierung 214 abhängig von den Labeln aus beiden Sätzen von Labeln generiert wird. Beispielsweise wird eine semantische Zuordnung der Label aus den beiden Sätzen vorgegeben. Die semantische Zuordnung wird z.B. von einem Experten oder mit einem Modell, das ausgebildet ist, die Label einander zuzuordnen, bestimmt. Ein Beispiel für das Modell ist das in Redmon et al. YOLO9000: Better, Faster, Stronger (arxiv 1612.08242) beschriebene WordNet.

Beispielsweise sind das Label "Zweirad" und das Label "Fahrzeug" einander in der semantischen Zuordnung zugeordnet. Eine beispielhafte erste Kodierung 214 für das erste digitale Bild 206 ist eine multi-hot Kodierung, d.h. ein Vektor [1, 0, 0, 0, 0, 1].

Die erste Kodierung 214 wird durch eine erste Repräsentation 216 in einem Zustandsraum 218 repräsentiert.

Die erste Repräsentation 216 für die erste Kodierung 214 des beispielhaften ersten digitalen Bildes 206 ist ein erster Vektor [0.0232, 0.1, 0.43] im Zustandsraum 218.

Die zweite Kodierung 220 wird durch eine zweite Repräsentation 222 im Zustandsraum 218 repräsentiert.

Die zweite Repräsentation 222 für die zweite Kodierung 216 des beispielhaften zweiten digitalen Bildes 210 ist ein zweiter Vektor [0.73, -0.21, -0.113] im Zustandsraum 218.

Die Kodierungen für die anderen digitalen Bilder werden im Beispiel durch je eine Repräsentation der jeweiligen Kodierung im Zustandsraum 218 repräsentiert.

Der Datensatz 102 zur Verwendung im Training umfasst im Beispiel das erste digitale Bild 206 und die erste Repräsentation 216 sowie das zweite digitale Bild 210 und die zweite Repräsentation 222. Das erste digitale Bild 206 und die erste Repräsentation 216 sind einander als erster Trainingsdatenpunkt 224 zugeordnet. Das zweite digitale Bild 210 und die zweite Repräsentation 222 sind einander als zweite Trainingsdatenpunkt 226 zugeordnet.

Der erste Datensatz 202 und der zweite Datensatz 204 werden mit einem computerimplementieren Verfahren zum Bestimmen des Datensatzes 102 zur Verwendung im Training kombiniert.

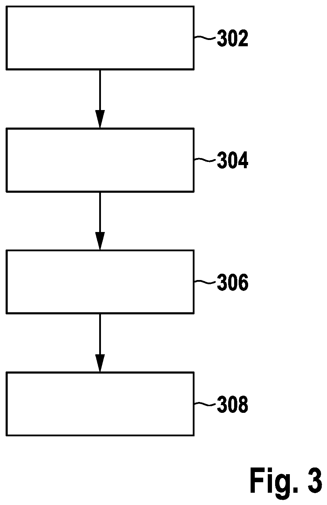

In Figur 3 ist ein Flussdiagramm mit Schritten eines computerimplementieren ersten Verfahrens dargestellt. Das erste Verfahren ist zum Bestimmen des Datensatzes 102 zur Verwendung im Training vorgesehen. Das erste Verfahren wird am Beispiel des ersten digitalen Bildes 206 und des zweiten digitalen Bildes 210 beschrieben. Das erste Verfahren wird für die anderen digitalen Bilder entsprechend ausgeführt.

Das erste Verfahren umfasst einen Schritt 302.

Im Schritt 302 werden der erste Datensatz 202 und der zweite Datensatz 204 bereitgestellt.

Anschließend wird ein Schritt 304 ausgeführt.

Im Schritt 304 wird abhängig von den beiden Sätzen von Labeln die erste Kodierung 214 zum Kennzeichnen des ersten digitalen Bildes 206 mit Labeln aus beiden Sätzen von Labeln bestimmt.

Im Schritt 304 wird optional abhängig von den beiden Sätzen von Labeln die zweite Kodierung 218 zum Kennzeichnen des zweiten digitalen Bildes 210 mit Labeln aus beiden Sätzen von Labeln bestimmt.

Anschließend wird ein Schritt 306 ausgeführt.

Im Schritt 306 wird die erste Kodierung 214 auf die erste Repräsentation 216 im Zustandsraum 218 abgebildet.

Im Schritt 306 wird optional die zweite Kodierung 220 auf die zweite Repräsentation 222 im Zustandsraum 218 abgebildet.

Im Schritt 308 wird der erste Datensatz 202 und der zweite Datensatz 204 zum Datensatz 102 zur Verwendung im Training kombiniert.

Der Datensatz 102 zur Verwendung im Training umfasst das erste digitale Bild 206 und die erste Repräsentation 216.

Optional umfasst der Datensatz 102 zur Verwendung im Training das zweite digitale Bild 210 und die zweite Repräsentation 222.

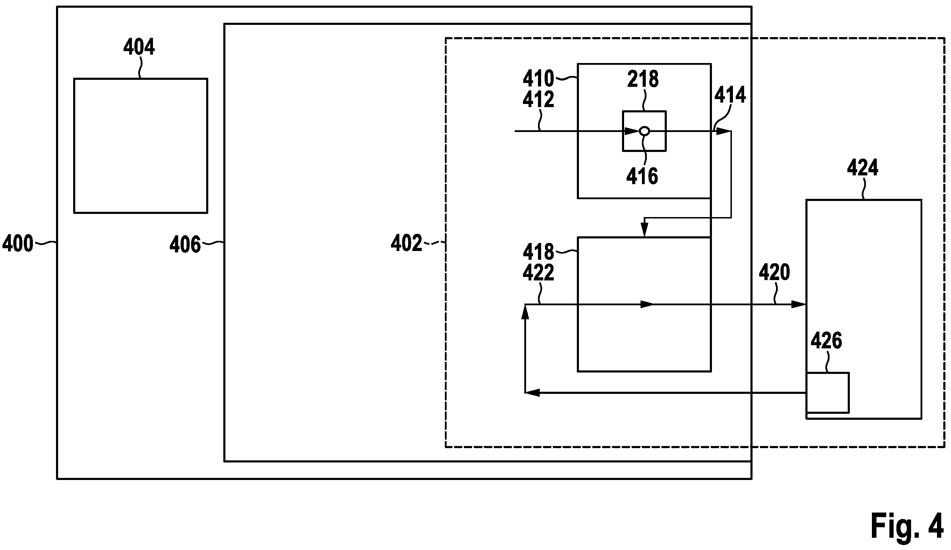

In Figur 4 ist eine schematische Darstellung einer zweiten Vorrichtung 400 dargestellt. Die zweite Vorrichtung 400 ist zum Training eines Systems 402 zum maschinellen Lernen ausgebildet.

Die zweite Vorrichtung 400 umfasst wenigstens einen zweiten Prozessor 404 und wenigstens einen zweiten Speicher 406.

Der wenigstens eine zweite Speicher 406 umfasst vom wenigstens einen zweiten Prozessor 404 ausführbare Instruktionen, bei deren Ausführung durch den wenigstens einen zweiten Prozessor 404 die zweite Vorrichtung 400 ein Verfahren zum Training ausführt. Der wenigstens eine zweite Prozessor 404 ist ausgebildet diese Instruktionen auszuführen. Im Beispiel umfasst die zweite Vorrichtung 400 das System 402 zum maschinellen Lernen. Im Beispiel umfasst der wenigstens eine zweite Speicher 406 einen Teil des Systems 402 zum maschinellen Lernen.

Das System 402 zum maschinellen Lernen umfasst ein Modell. Das Modell umfasst im Beispiel ein Generative Adversarial Network, GAN, 410, das zur semantischen Bildsynthese ausgebildet ist. Das GAN 410 ist ausgebildet, wenigstens ein Label 412 für ein synthetisches oder echtes digitales Bild 414 auf eine Repräsentation 416 des wenigstens einen Label 412 in den Zustandsraum 218 abzubilden. Das wenigstens eine Label 412 für das synthetische oder echte digitale Bild 414 ist z.B. eine one-hot Kodierung eines Labels oder eine multi-hot Kodierung mehrerer Label. Der Ausdruck echtes Bild bezieht sich auf ein digitales Bild, das eine real existierende Ansicht wiedergibt.

Das GAN 410 ist beispielsweise ausgebildet, die jeweilige Repräsentation im Zustandsraum 218 durch eine lineare Projektion der jeweiligen Kodierung zu bestimmen. Das GAN 410 umfasst beispielsweise ein Kodierer für den Zustandsraum 218 oder nutzt Wissen eines bereits trainierten Sprachmodells wie Vord2Vec.

Das GAN 410 ist ausgebildet, die Repräsentation 416 aus dem Zustandsraum 218 auf das synthetische digitale Bild 414 abzubilden.

Das GAN 410 umfasst z.B. eine bereits trainiertes neuronales Netzwerk.

Es kann vorgesehen sein, dass das Modell einen Klassifizierer 418 umfasst. Der Klassifizierer 418 ist dazu ausgebildet, wenigstens ein Label 420, insbesondere eine one-hot Kodierung eines Labels oder eine multi-hot Kodierung mehrerer Label, für das synthetische digitale Bild 414 oder für ein digitales Bild 422 zu bestimmen. Der Klassifizierer umfasst z.B. eine bereits trainiertes neuronales Netzwerk.

Es kann vorgesehen sein, dass das System 402 zum maschinellen Lernen ein technisches System 424 umfasst, das zum zumindest teilweise autonomen Betrieb abhängig vom wenigstens einen Label 420 für das digitale Bild 422 ausgebildet ist.

Das technische System 424 ist z.B. ein physikalisches System. Das technische System 424 ist z.B. ein Roboter, insbesondere ein autonomes Fahrzeug oder ein Haushaltsgerät oder ein Werkzeug oder eine Fertigungsmaschine oder ein persönliches Assistenzsystem oder ein Zutrittskontrollsystem.

Das technische System 424 umfasst z.B. einen Sensor 426, der ausgebildet ist, das digitale Bild 422 zu erfassen. Der Sensor 426 ist z.B. eine Kamera, ein Radarsensor, ein LiDAR-Sensor, ein Ultraschallsensor, ein Infrarotsensor, ein Bewegungssensor oder ein Wärmebildsensor.

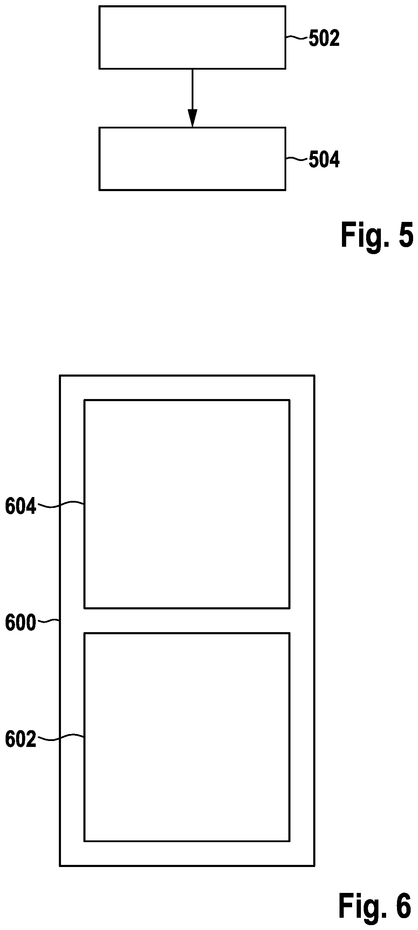

In Figur 5 ist ein Flussdiagramm mit Schritten eines computerimplementieren zweiten Verfahrens dargestellt. Das zweite Verfahren ist zum Training des Systems 402 zum maschinellen Lernen vorgesehen.

Das Training kann ein Training des GAN 410 alleine, ein Training des Klassifizierers 418 alleine oder ein gemeinsames Training von GAN 410 und Klassifizierer 418 mit dem Datensatz 102 zur Verwendung im Training vorsehen.

Das zweite Verfahren wird am Beispiel des ersten digitalen Bildes 206 und des zweiten digitalen Bildes 210 beschrieben. Das zweite Verfahren wird für die anderen digitalen Bilder entsprechend ausgeführt.

Das zweite Verfahren zum Training des Systems 402 umfasst einen Schritt 502.

Im Schritt 502 wird der Datensatz 102 zur Verwendung im Training mit dem ersten Verfahren bestimmt.

Anschließend wird ein Schritt 504 ausgeführt.

Im Schritt 504 wird das GAN 410 mit der ersten Repräsentation 216 und dem ersten digitalen Bild 206 aus dem Datensatz 102 zur Verwendung im Training trainiert.

Das GAN 410 wird dazu trainiert, die Repräsentation 416 aus dem Zustandsraum 218 auf das synthetische digitale Bild 414 abzubilden.

Das GAN 410 wird optional mit der zweiten Repräsentation 222 und dem zweiten digitalen Bild 210 aus dem Datensatz 102 zur Verwendung im Training trainiert.

Das bedeutet, im Beispiel wird das GAN 410 alleine mit dem Datensatz 102 zur Verwendung im Training trainiert.

In Figur 6 ist eine schematische Darstellung einer dritten Vorrichtung 500 dargestellt. Die dritte Vorrichtung 500 ist zum Betreiben des Systems 302 zum maschinellen Lernen ausgebildet.

Die dritte Vorrichtung 600 umfasst wenigstens einen dritten Prozessor 602 und wenigstens einen dritten Speicher 604.

Der wenigstens eine dritte Speicher 604 umfasst vom wenigstens einen dritten Prozessor 602 ausführbare Instruktionen, bei deren Ausführung durch den wenigstens einen dritten Prozessor 602 die dritte Vorrichtung 600 ein Verfahren zum maschinellen Lernen ausführt. Der wenigstens eine dritte Prozessor 602 ist ausgebildet, diese Instruktionen auszuführen.

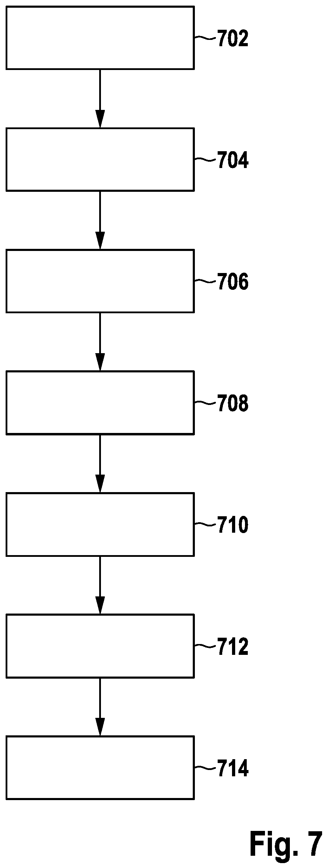

In Figur 7 ist ein Flussdiagramm mit Schritten eines computerimplementieren dritten Verfahrens dargestellt. Das dritte Verfahren ist zum maschinellen Lernen, insbesondere zum Betreiben des Systems 402 zum maschinellen Lernen, vorgesehen.

Das dritten Verfahren umfasst einen Schritt 702.

Im Schritt 702 wird das GAN 410 mit dem zweiten Verfahren trainiert.

Anschließend wird ein Schritt 704 ausgeführt.

Im Schritt 704 wird das wenigstens eine Label 412 für das synthetische digitale Bild 414 zum Training des Klassifizierers 418 vorgegeben.

Anschließend wird ein Schritt 706 ausgeführt.

Im Schritt 706 wird das synthetische digitale Bild 414 mit dem GAN410 abhängig vom wenigstens einen Label 412 für das synthetische digitale Bild 414 bestimmt.

Anschließend wird ein Schritt 708 ausgeführt.

Im Schritt 708 wird der Klassifizierer 418 abhängig vom synthetischen digitalen Bild 414 dazu trainiert, das wenigstens eine Label 412 für das synthetische digitale Bild 414 zu bestimmen.

Es kann vorgesehen sein, dass der Klassifizierer 418 oder das GAN 410 bereits trainiert sind. Es kann vorgesehen sein, dass nur der Klassifizierer 418 alleine oder nur das GAN 410 alleine trainiert wird.

Optional wird anschließend ein Schritt 710 ausgeführt.

Im Schritt 710 wird das digitale Bild 422 erfasst.

Optional wird anschließend ein Schritt 712 ausgeführt.

Im Schritt 712 wird mit dem Klassifizierer 418 das wenigstens eine Label 420 für das digitale Bild 422 bestimmt.

Optional wird anschließend ein Schritt 714 ausgeführt.

Im Schritt 714 wird das technische System 424 abhängig vom wenigstens einen Label 420 für das digitale Bild 422 zumindest teilweise autonom betrieben.

Die Verfahren sind z.B. je als ein Computerprogramm implementiert, das von einem Computer ausführbare Instruktionen umfasst, bei deren Ausführung durch den Computer das jeweilige Verfahren abläuft.

## Patentansprüche

1. Computerimplementiertes Verfahren zum Bestimmen eines Datensatzes (102) zur Verwendung in einem Training eines Systems (402) zum maschinellen Lernen, **dadurch gekennzeichnet, dass** wenigstens zwei Datensätze zum Datensatz (102) zur Verwendung im Training kombiniert werden (308), wobei die wenigstens zwei Datensätze einen ersten Datensatz (202) und einen zweiten Datensatz (204) umfassen, wobei der erste Datensatz (202) ein erstes digitales Bild (206), das durch wenigstens ein Label (208), insbesondere durch eine one-hot Kodierung mit einem Label oder durch eine multi-hot Kodierung mit mehreren Labeln, aus einem ersten Satz von Labeln gekennzeichnet ist, umfasst (302), und der zweite Datensatz (204) ein zweites digitales Bild (210), das durch wenigstens ein Label (212), insbesondere durch eine one-hot Kodierung mit einem Label oder durch eine multi-hot Kodierung mit mehreren Labeln, aus einem zweiten Satz von Labeln gekennzeichnet ist, umfasst (302), wobei die beiden Sätze von Labeln sich durch wenigstens ein Label unterscheiden, wobei abhängig von den beiden Sätzen von Labeln eine erste Kodierung (214) zum Kennzeichnen des ersten digitalen Bildes (206) mit Labeln aus beiden Sätzen von Labeln bestimmt wird (304), wobei die erste Kodierung (214) auf eine erste Repräsentation (216) in einem Zustandsraum (218) abgebildet wird (306), wobei der Datensatz (102) zur Verwendung im Training das erste digitale Bild (206) und die erste Repräsentation (216) umfasst.

2. Verfahren nach Anspruch 1, **dadurch gekennzeichnet, dass** abhängig von den beiden Sätzen von Labeln eine zweite Kodierung (218) zum Kennzeichnen des zweiten digitalen Bildes (210) mit Labeln aus beiden Sätzen von Labeln bestimmt wird (204), wobei die zweite Kodierung (220) auf eine zweite Repräsentation (222) im Zustandsraum (218) abgebildet wird, wobei der Datensatz (102) zur Verwendung im Training das zweite digitale Bild (210) und die zweite Repräsentation (222) umfasst (308).

3. Computerimplementiertes Verfahren zum Training eines Systems (402) zum maschinellen Lernen, **dadurch gekennzeichnet, dass** ein Datensatz (102) zur Verwendung im Training mit dem Verfahren nach einem der vorherigen Ansprüche bestimmt wird (502), wobei das System (402) ein Modell (410) umfasst, das ausgebildet ist, wenigstens ein Label (412), insbesondere eine one-hot Kodierung eines Labels oder eine multi-hot Kodierung mehrerer Label, auf eine Repräsentation (416) des wenigstens einen Label (412) in dem im Datensatz zur Verwendung im Training vorgesehenen Zustandsraum (218) abzubilden und die Repräsentation (416) aus dem Zustandsraum (218) auf ein synthetisches digitales Bild (414) abzubilden, wobei das Modell (410) mit der ersten Repräsentation (216) und dem ersten digitalen Bild (206) und/oder mit der zweiten Repräsentation (222) und dem zweiten digitalen Bild (210) aus dem Datensatz trainiert wird (504), die Repräsentation aus dem Zustandsraum (218) auf das synthetische digitale Bild abzubilden, oder wobei das Modell (418) dazu ausgebildet ist, ein digitales Bild (422) auf eine Repräsentation (416) wenigstens eines Labels (420) in dem im Datensatz zur Verwendung im Training vorgesehenen Zustandsraum (218) abzubilden und die Repräsentation (416) aus dem Zustandsraum (218) auf das wenigstens eine Label (420), insbesondere eine one-hot Kodierung eines Labels oder eine multi-hot Kodierung mehrerer Label, für das digitale Bild (422) zu bestimmen, wobei das Modell (418) mit der ersten Repräsentation (216) und dem ersten digitalen Bild (206) und/oder mit der zweiten Repräsentation (222) und dem zweiten digitalen Bild (210) aus dem Datensatz trainiert wird (504), das digitale Bild (422) auf die Repräsentation (416) im Zustandsraum (218) abzubilden.

4. Computerimplementiertes Verfahren zum Betreiben eines Systems (402) zum maschinellen Lernen, **dadurch gekennzeichnet, dass** das System (402) zum maschinellen Lernen ein Modell (410, 418) umfasst, das ausgebildet ist, wenigstens ein Label (412) für ein synthetisches digitales Bild (414), insbesondere eine one-hot Kodierung eines Labels oder eine multi-hot Kodierung mehrerer Label, auf eine Repräsentation (416) des wenigstens einen Label (412) in dem im Datensatz zur Verwendung im Training vorgesehenen Zustandsraum (218) abzubilden und die Repräsentation (416) aus dem Zustandsraum (218) auf das synthetische digitale Bild (416) abzubilden oder wenigstens ein Label (420), insbesondere eine one-hot Kodierung eines Labels oder eine multi-hot Kodierung mehrerer Label, für ein digitales Bild (422) zu bestimmen, wobei das Modell (410, 418) mit dem Verfahren nach Anspruch 3 trainiert wird (702), wobei mit dem Modell (410) das wenigstens eine Label (412) auf eine Repräsentation (416) des wenigstens einen Labels (412) im Zustandsraum (218) abgebildet und die Repräsentation (416) im Zustandsraum auf das synthetische digitale Bild (414) abgebildet wird, oder wobei mit dem Modell (418) das wenigstens eine Label (420) für ein digitales Bild (422) bestimmt wird.

5. Verfahren nach Anspruch 4, **dadurch gekennzeichnet, dass** das System (402) zum maschinellen Lernen ein technisches System (424) umfasst, das zum zumindest teilweise autonomen Betrieb abhängig von wenigstens einem Label (420), insbesondere eine one-hot Kodierung eines Labels oder eine multi-hot Kodierung mehrerer Label, für ein digitales Bildes (422) ausgebildet ist, wobei das digitale Bild (422) erfasst wird (710), wobei mit dem Modell (418) das wenigstens eine Label (420) für das digitale Bild (422) bestimmt wird (712), und wobei das technische System (424) abhängig vom wenigstens einen Label (420) für das digitale Bild (422) zumindest teilweise autonom betrieben wird (714).

6. Vorrichtung (100) zum Bestimmen eines Datensatzes (102) zur Verwendung in einem Training eines Systems (402) zum maschinellen Lernen, **dadurch gekennzeichnet, dass** die Vorrichtung wenigstens einen Prozessor (104) und wenigstens einen Speicher (106) umfasst, wobei der wenigstens eine Speicher (106) vom wenigstens einen Prozessor (104) ausführbare Instruktionen umfasst, bei deren Ausführung durch den wenigstens einen Prozessor (104) die Vorrichtung (100) das Verfahren nach einem der Ansprüche 1 oder 2 ausführt, wobei der wenigstens einen Prozessor (104) ausgebildet ist, die Instruktionen auszuführen.

7. Vorrichtung (400) zum Training eines Systems (402) zum maschinellen Lernen, **dadurch gekennzeichnet, dass** die Vorrichtung (300) wenigstens einen Prozessor (404) und wenigstens einen Speicher (406) umfasst, wobei der wenigstens eine Speicher (406) vom wenigstens einen Prozessor (304) ausführbare Instruktionen umfasst, bei deren Ausführung durch den wenigstens einen Prozessor (404) die Vorrichtung das Verfahren nach Anspruch 3 ausführt, wobei der wenigstens einen Prozessor (404) ausgebildet ist, die Instruktionen auszuführen.

8. Vorrichtung (600) zum Betreiben eines Systems (402) zum maschinellen Lernen, **dadurch gekennzeichnet, dass** die Vorrichtung (600) wenigstens einen Prozessor (602) und wenigstens einen Speicher (604) umfasst, wobei der wenigstens eine Speicher (604) vom wenigstens einen Prozessor (602) ausführbare Instruktionen umfasst, bei deren Ausführung durch den wenigstens einen Prozessor (602) die Vorrichtung (600) das Verfahren nach einem der Ansprüche 4 oder 5 ausführt, wobei der wenigstens einen Prozessor (602) ausgebildet ist, die Instruktionen auszuführen

9. Computerprogramm, **dadurch gekennzeichnet, dass** das Computerprogramm von einem Computer ausführbare Instruktionen umfasst, bei deren Ausführung durch den Computer das Verfahren nach einem der Ansprüche 1 bis 5 abläuft.
